# EUROPÄISCHE PATENTSCHRIFT

(11) **EP 1 161 816 B1**
(45) Veröffentlichungstag und Bekanntmachung des Hinweises auf die Patenterteilung: **09.02.2005**
(21) Anmeldenummer: 00915125.9
(22) Anmeldetag: 01.03.2000
(51) Int. Cl.: H04L 12/44, H04L 12/413, G06F 13/366

(54) **MULTIPLEXER-BUS MIT LOKALEN BUS-KNOTEN**
MULTIPLEXER BUS COMPRISING LOCAL BUS NODES
BUS MULTIPLEXEUR COMPORTANT DES NOEUDS DE BUS LOCAUX

(30) Priorität: 17.03.1999 DE 19911954
(43) Veröffentlichungstag der Anmeldung: 12.12.2001
(73) Patentinhaber: Infineon Technologies AG, 81669 München (DE)
(72) Erfinder: HUCH, Martin, D-81739 München (DE)
(74) Vertreter: Jannig, Peter, Dipl.-Ing.
(86) Internationale Anmeldenummer: PCT/DE2000/000594
(87) Internationale Veröffentlichungsnummer: WO 2000/055737

(56) Entgegenhaltungen:
- GB-A- 1 561 962
- US-A- 4 903 280
- US-A- 5 339 307
- BLUM A: "CHECKING OF TRISTATE DRIVERS" Mai 1982 (1982-05) , IBM TECHNICAL DISCLOSURE BULLETIN,US,IBM CORP. NEW YORK, VOL. 24, NR. 12, PAGE(S) 6492-6493 XP000714096 ISSN: 0018-8689 das ganze Dokument

## Beschreibung

Die Erfindung betrifft eine Schaltungsanordnung von Multiplexern nach dem Oberbegriff des Anspruches 1.

Die angegebene Schaltung soll insbesondere dazu dienen, mehrere Sende-/Empfangsschaltungen so miteinander zu verbinden, daß sie in der Lage sind, miteinander zu kommunizieren. Häufig wird diese Aufgabe von sog. Tristate-Bussen übernommen, wobei diese allerdings einige Nachteile aufweisen. So ist die kapazitive Belastung der Busleitung - hervorgerufen durch die abgeschalteten Sendeschaltungen der Busteilnehmer - proportional zur Sendeleistung des sendenden Bus-Teilnehmers. Das Verhältnis von Sendeleistung zu kapazitiver Belastung läßt sich daher nicht gezielt durch Designmaßnahmen verbessern sondern hängt von den Technologieparametern und der Anzahl der beteiligten Sende-/Empfangsschaltungen ab. Bei einer vorgegebenen Technologie ist somit die erreichbare Übertragungsgeschwindigkeit allein eine Funktion der Anzahl der angeschlossenen Sende-/Empfangsschaltungen. Insbesondere reduziert sich bei einer Erhöhung der Busteilnehmer die Übertragungsgeschwindigkeit.

Des weiteren erfordert die Verwendung eines Tristate-Busses eine relativ aufwendige Ansteuerlogik. Da ein gleichzeitiges Senden zweier Busteilnehmer gleichbedeutend mit einem Kurzschluß wäre, muß sichergestellt werden, daß niemals zwei Sende-/Empfangsschaltungen gleichzeitig ein Signal auf den Bus abgeben. Beim Umschalten von einer Sende-/Empfangsschaltung auf die andere muß dabei jedesmal eine Pause eingefügt werden, in der gar kein Busteilnehmer aktiv ist, wobei diese Pause über einen zentralen Takt synchronisiert werden muß. Besonders bei komplexen Bussystemen ergibt sich dabei die Schwierigkeit, daß nicht mehr sichergestellt werden kann, daß die Taktsignale gleichzeitig von allen Sende-/Empfangsschaltungen empfangen werden. Die Pause muß also dementsprechend so groß sein, daß gewährleistet ist, daß selbst bei solchen Laufzeitunterschieden von Taktsignalen keine zwei Busteilnehmer gleichzeitig senden. Ferner werden die Dimensionierung und die Verifikation bei der Entwicklung von Tristate-Bussen durch die derzeit vorhandenen CAD-Werkzeuge nur sehr unzureichend unterstützt.

Um Nachteile dieser Art zu vermeiden, werden anstelle von Tristate-Bussen auch Multiplexer verwendet. Grundsätzlich sind dabei zwei äquivalente Lösungen des Problems bekannt. Im ersten Fall erhält jede Sende-/Empfangsschaltung an ihrem Eingang einen eigenen Multiplexer, mit dem sie bestimmen kann, von welcher Sende-/Empfangsschaltung sie Signale empfangen möchte. Im Zweiten Fall sendet jede Sende-/Empfangsschaltung ihr Signal zu einer zentral angeordneten Verteilerschaltung, die eines der einkommenden Signale auswählt und an alle angeschlossenen Sende-/Empfangsschaltungen weiterleitet.

Auch bei diesen beiden Möglichkeiten ergeben sich einige Probleme. Insbesondere sind beide Lösungen nicht flächenoptimal sondern benötigen einen relativ großen räumlichen Bereich, da sehr viele Verbindungsleitungen zwischen den einzelnen Sende-/Empfangsschaltungen bzw. den dazugehörigen Multiplexern verlegt sein müssen. Der Platzbedarf übersteigt den eines äquivalenten Tristate-Busses oftmals um ein vielfaches. Weiterhin ist eine gegebene Struktur auf eine bestimmte Anzahl von Sende-/Empfangsschaltungen beschränkt und damit sehr unflexibel erweiterbar. Soll ein weiterer Busteilnehmer hinzugefügt werden, muß die gesamte Struktur der Verbindungsleitungen dieser neuen Situation angepaßt werden.

Es ist daher Aufgabe der vorliegenden Erfindung, eine Anordnung von Multiplexern zur Verbindung mehrerer Sende-/Empfangsschaltungen anzugeben, die einen möglichst geringen Platzbedarf hat und mit wenig Aufwand an eine unterschiedliche Anzahl von teilnehmenden Sende-/Empfangsschaltungen angepaßt werden kann.

Diese Aufgabe wird durch eine Schaltung, welche die Merkmale des Anspruches 1 aufweist, gelöst. Die erfindungsgemäße Schaltung zeichnet sich insbesondere dadurch aus, daß die Verbindung zwischen den verschiedenen Sende-/Empfangsschaltungen durch mehrere lokal verteilte Bus-Knoten realisiert wird anstatt durch eine zentrale Verteilungsschaltung. Eine einzelne Sende-/Empfangsschaltung ist nur mit dem nächstgelegenen Bus-Knoten direkt verbunden, der wiederum Verbindungsleitungen zu weiteren Sende-/Empfangsschaltungen oder Bus-Knoten aufweist.

Auf diese Weise wird eine relativ niedrige Gesamtlänge an Datenleitungen erreicht und der Platzbedarf dieser Busschaltung ist deutlich geringer als bei den bekannten Multiplexer-Bussen. Ein weitere Vorteil ist darin zu sehen, daß der Aufbau aller Bus-Knoten im wesentlichen identisch ist und somit der Aufwand zur Realisierung auch von relativ komplexen Busschaltung mit vielen daran angeschlossenen Sende-/Empfangsschaltungen gering ist. Aufgrund des modularen Aufbaus dieser Lösung ist es ohne weiteres möglich, lokale Änderungen vorzunehmen, welche die anderen Bereiche der Busschaltung nicht beeinflussen. Insbesondere kann ohne Schwierigkeiten die Anzahl der teilnehmenden Sende-/Empfangsschaltungen erhöht oder erniedrigt werden.

Weiterbildungen der Erfindung sind in den Unteransprüchen beschrieben. Die einzelnen Busknoten können beispielsweise durch ein einziges, einfach herzustellendes UND/ODER Gatter gebildet werden.

Die Erfindung wird im Folgenden anhand der Figuren der beiliegenden Zeichnung näher erläutert. Dabei zeigen:
Fig. 1 das Schaltbild eines erfindungsgemäßen Bus-Knotens mit vier angeschlossenen Sende-/Empfangsschaltungen bzw. Busknoten;
Fig. 2 ein schematisches Ausführungsbeispiel einer Busschaltung mit 14 daran angeschlossenen Sende-/Empfangsschaltungen;
Fig. 3 schematisch den Verlauf der Datensignal- und Steuersignal-Leitungen zwischen einem zentralen Bus-Knoten sowie zwei mit diesem verbundenen weiteren Bus-Knoten und zwei Sende-/Empfangsschaltung;
Fig. 4 den Verlauf der Datenleitungen zwischen drei miteinander verbundenen Bus-Knoten;
Fig. 5 eine Weiterbildung des in Fig. 1 dargestellten Bus-Knotens.

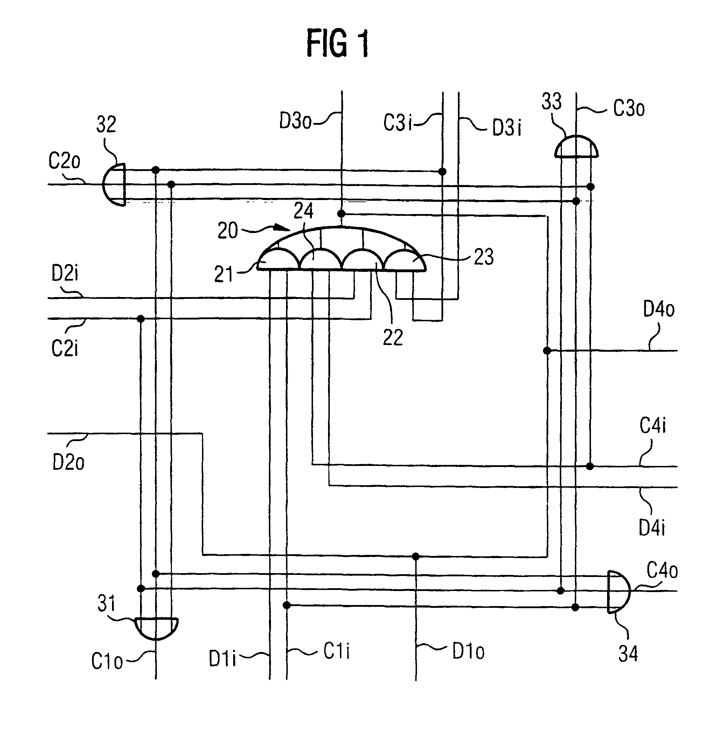

Anhand Fig. 1 sei zunächst der Aufbau und die Funktion eines einzelnen Bus-Knotens beschrieben der in diesem Fall mit vier Nachbarelementen verbunden ist. Diese Nachbarelemente können dabei entweder weitere gleichartige Bus-Knoten oder Sende-/Empfangsschaltungen sein. Das zentrale Schaltelement eines solchen Bus-Knotens ist ein UND/ODER Gatter 20. Dieses UND/ODER Gatter 20 weist für jedes Nachbarelement, mit dem der Knoten verbunden ist, jeweils eine UND Stufe 21, 22, 23, 24 auf, deren zwei Eingänge mit einer Datensignal-Eingangsleitung und einer Steuersignal-Eingangsleitung verbunden sind. Im dargestellten Fall sind beispielsweise die Eingänge der ersten UND Stufe 21 mit der Datensignal-Eingangsleitung D1i und der Steuersignal-Eingangsleitung C1i des ersten Nachbarelements verbunden. Zu jedem Nachbarelement führt außerdem jeweils eine Datensignal-Ausgangsleitung (D1o, D2o usw.) sowie eine Steuersignal-Ausgangsleitung (C1o, C2o usw.).

Es sei angemerkt, daß die schematisch nur mit einer Linie dargestellten Datensignal-Eingangs- und Datensignal-Ausgangsleitungen durchaus auch aus mehreren parallel verlaufenden Leitungen gebildet sein können, entsprechend der Breite des Busses. In diesem Fall weist ein solcher Bus-Knoten für jede der parallelen Datenleitungen ein eigenes UND/ODER Gatter auf, wobei die weiterhin aus einer einzelnen Leitung bestehenden Steuerleitungen zu den UND/ODER Gattern verzweigen, da ein Steuersignal immer für ein gesamtes Bussignal gilt. Der Einfachheit halber sei allerdings weiterhin angenommen, daß die Datenleitungen nur aus einer einzelnen Leitung bestehen.

Die Nachbarelemente sind so ausgebildet, daß sie beim Senden eines Datensignals über die Datensignal-Eingangsleitungen D1i bis D4i an den dargestellten Bus-Knoten jeweils gleichzeitig auch ein Steuersignal über die Steuersignal-Eingangsleitungen C1i bis C4i abgeben. Empfangen sie hingegen über die Steuersignal-Ausgangsleitungen C1o bis C4o ein Signal, so bedeutet dies, daß gleichzeitig auch ein Signal über die jeweiligen Datensignal-Ausgangsleitungen D1o bis D4o an sie geschickt wird.

Im folgenden sei angenommen, daß nur das erste Nachbarelement über die Leitungen D1i und C1i ein Signal an den Bus-Knoten sendet, während die drei anderen Nachbarelemente gerade nicht senden. Da somit von den drei Steuersignal-Eingangsleitungen C2i, C3i und C4i kein Signal ankommt, sind die drei entsprechenden UND Stufen 22, 23 und 24 gesperrt, während die UND Stufe 21 durch Setzen der Steuersignal-Eingangsleitung C1i freigegeben ist. Der Ausgang des UND/ODER Gatters 20 entspricht somit dem über die Leitung D1i einkommenden Datensignal des ersten Nachbarelements.

Der Ausgang des UND/ODER Gatters 20 verzweigt anschließend in die vier Datensignal-Ausgangsleitungen D1o bis D4o, so daß das Datensignal an alle vier benachbarten Elemente weitergeleitet wird. Damit diese das Datensignal allerdings auch tatsächlich als zu empfangendes Signal akzeptieren und - falls es sich dabei um weitere Bus-Knoten handelt - es an die nächsten Nachbarelemente oder Sende-/Empfangsschaltungen weiterleiten, ist auch der gleichzeitige Empfang eines Steuersignals notwendig. Dies wird dadurch erreicht, daß die Steuersignal-Eingangsleitung C1i noch vor der UND Stufe 21 verzweigt und in die Steuersignal-Ausgangsleitungen C2o, C3o und C4o der drei anderen Nachbarelemente mündet.

Wie dem in Fig. 1 dargestellten Schaltbild weiterhin entnommen werden kann, ist jeder Steuersignal-Ausgangsleitung C1o bis C4o jeweils ein ODER Gatter 31, 32, 33 bzw. 34 vorgeschaltet, in das Abzweigungen der Steuersignal-Eingangsleitungen der jeweils drei anderen Nachbarelemente münden. Es wird in dem dargestellten Bus-Knoten somit nur unterschieden, ob ein in einer Datensignal-Ausgangsleitung D1o bis D4o fortlaufendes Datensignal von einem der drei anderen angeschlossenen Elemente stammt oder nicht. In dem diskutierten Fall, daß nur das erste angeschlossene Element sendet, empfängt dieses auf seiner entsprechenden Steuersignal-Ausgangsleitung C1o kein weiteres Steuersignal mehr, wird das Datensignal also nicht noch einmal weiterverarbeiten. Auf diese Weise ist gewährleistet, daß sich das Signal einer einzelnen sendenden Sende-/Empfangsschaltung immer nur in eine Richtung fortpflanzt und nicht irgendwelche unerwünschten Rückkopplungsschleifen durchläuft.

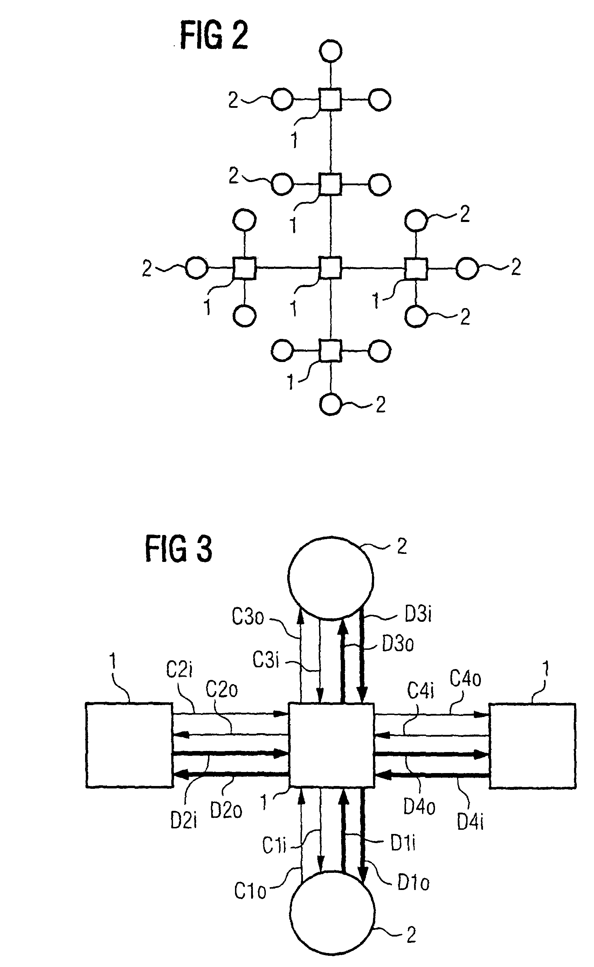

In Fig. 2 ist dargestellt, wie mit den anhand Fig. 1 erläuterten Bus-Knoten - also Knoten mit Anschlüssen zu vier Nachbarelementen - eine Busverbindung zwischen 14 Sende-/Empfangsschaltungen konkret realisiert werden kann. Das Bezugszeichen 1 kennzeichnet dabei die eben beschriebenen Bus-Knoten, während die Sende-/Empfangsschaltungen mit dem Bezugszeichen 2 versehen sind. Die Verbindungslinien zwischen den Bus-Knoten 1 bzw. den Sende-/Empfangsschaltungen 2 stellen die vier Leitungen (Datensignal-Eingangs- und Datensignal-Ausgangsleitung sowie Steuersignal-Eingangs- und Steuersignal-Ausgangsleitung) im ganzen dar. Das gesamte Bussystem ist so ausgeführt, daß ein Signal, welches von einer der Sende-/Empfangsschaltungen 2 ausgesendet wird, sich über die gesamte Anordnung verteilt, so daß es von allen anderen Sende-/Empfangsschaltungen 2 empfangen werden kann.

Da es nach dem oben gesagten für einen Bus-Knoten 1 unerheblich ist, ob einkommende Daten- und Steuersignale von einem benachbarten weiteren Bus-Knoten 1 oder direkt von einer angeschlossenen Sende-/Empfangsschaltung 2 stammen, ist die Anzahl der direkt mit einem Bus-Knoten 1 verbundenen Sende-/Empfangsschaltungen 2 verschieden. In der dargestellten sternförmigen Anordnung sind die mehr zentral angeordneten Bus-Knoten 1 nur mit wenigen Sende-/Empfangsschaltungen 2 unmittelbar verbunden - teilweise sogar gar nicht - während die im Randbereich liegenden Bus-Knoten 1 mehrere direkte Verbindungen zu diesen aufweisen.

Fig. 2 betrachtend ist es auch verständlich, daß der Platzbedarf einer solchen erfindungsgemäßen Ausführung des Multiplexer-Busses deutlich geringer ist als bei den bekannten Lösungen. Insbesondere die Gesamtlänge der Verbindungsleitungen ist um ein vielfaches geringer als für den Fall, daß jede Sende-/Empfangsschaltung 2 mit allen anderen Sende-/Empfangsschaltungen 2 direkt verbunden ist.

In Fig. 3 ist noch einmal schematisch in Vergrößerung der Verlauf der Datensignal- und Steuersignal-Leitungen zwischen einem zentralen Bus-Knoten 1 sowie zwei mit diesem verbundenen weiteren Bus-Knoten 1 und zwei Sende-/Empfangsschaltung 2 dargestellt. Die dort verwendeten Bezugszeichen für die verschiedenen Leitungen entsprechen denen der Fig. 1.

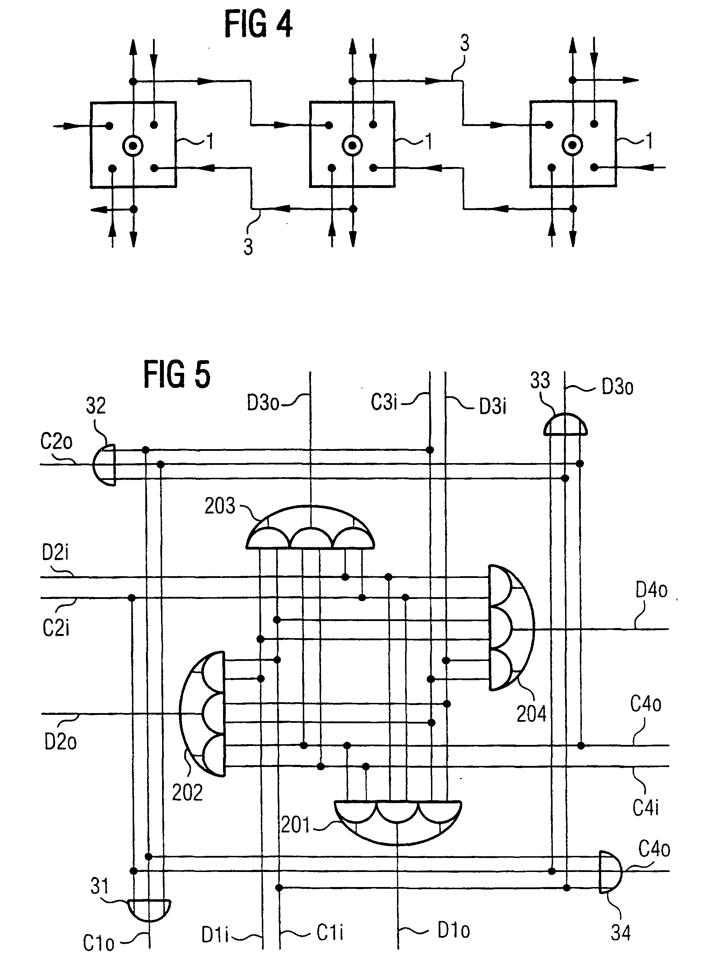

Der konkrete Verlauf der Datenleitungen 3 zwischen drei miteinander verbundenen Bus-Knoten ist in Fig. 4 gezeigt. Anhand dieser Figur wird noch einmal deutlich, daß in einer beliebi-gen Laufrichtung des Busses maximal zwei Datenleitungen 3 - die zweite für den Datentransport in entgegengesetzter Richtung - verlaufen. Zur Verbindung der beiden außen gelegenen Bus-Knoten 1 sind keine weiteren Datenleitungen nötig.

Ein weiterer Vorteil in der Verwendung solcher Bus-Knoten 1 ist darin zu sehen, daß die Signale durch die UND/ODER Gatter 20 immer wieder "aufgefrischt" werden. Da bei einer ununterbrochenen Leitung die Signallaufzeit quadratisch mit der Leitungslänge ansteigt, wird bei dem vorgeschlagenen Bussystem auch eine Verkürzung der Signallaufzeiten erreicht. Dieser Effekt kann zusätzlich durch nach den UND/ODER Gattern 20 angeordnete (nicht dargestellte) Buffer unterstützt werden.

Wie schon oben bemerkt wurde, ist es bei dieser Lösung auch ohne weiteres möglich, die Anzahl der angeschlossenen Busteilnehmer zu verändern. Um in der in Fig. 2 dargestellten Busschaltung eine weitere Sende-/Empfangsschaltung 2 hinzuzufügen, muß beispielsweise nur eine der Sende-/Empfangsschaltungen 2 durch einen Bus-Knoten 1 ersetzt werden, mit dem dann die ersetzte Sende-/Empfangsschaltung 2 sowie die neue verbunden werden. Die übrigen Sende-/Empfangsschaltungen 2 in anderen Bereichen der Anordnung sind von dieser Veränderung nicht betroffen. Das gesamte System kann somit wesentlich flexibler gehandhabt werden als in den bisher bekannten Ausführungen von Multiplexer-Bussen.

Die verwendeten Bus-Knoten 1 sind natürlich nicht auf eine Verbindung zu vier Nachbarelementen beschränkt. Eine andere Zahl von Verbindungen ist jederzeit möglich, wobei sich bei einem räumlichen Aufbau des Busses insbesondere 6 Nachbarelemente anbieten. Ebenfalls kann die Anzahl von Verbindungen zu Nachbarelementen innerhalb eines einzigen Bussystems variieren, wobei eine Zusammensetzung aus lauter gleichartigen Bus-Knoten 1 natürlich die Gesamtstruktur noch einmal vereinfacht. Des weiteren müssen die Sende-/Empfangsschaltungen 2 und die Bus-Knoten 1 nicht wie dargestellt sternförmig angeordnet sein. Zur Verbindung von 14 Sende-/Empfangsschaltungen 2 sind viele Lösungen denkbar, beispielsweise kettenförmige, baum- oder pyramidenförmige Anordnungen. Das Gesamtsystem ist somit sehr flexibel strukturierbar, wodurch z.B. ein vorgegebener räumlicher Bereich optimal ausgenützt werden kann. Mit der in Fig. 2 dargestellten Anordnung wird jedoch vorteilhaft erreicht, daß die Leitungslänge auch zwischen den beiden am weitest auseinanderliegenden Sende-/Empfangsschaltungen 2 relativ kurz ist im Vergleich zur kettenförmigen Lösung.

Bisher wurde nur der Idealfall besprochen, daß zu einem bestimmten Zeitpunkt jeweils nur eine Sende-/Empfangsschaltungen 2 ein Datensignal auf den Bus sendet. Dies kann beispielsweise dadurch erreicht werden, daß eine zentrale Steuerlogik alle Sende-/Empfangsschaltungen 2 kontrolliert und entscheidet, welche der Sende-/Empfangsschaltungen 2 gerade senden darf. Da die Aufgabe der Steuerlogik in diesem Fall genau die gleiche ist wie bei der Verwendung eines Tristate-Busses, kann eine von dort bekannte Steuerlogik auch bei dem hier vorgeschlagenen erfindungsgemäßen Multiplexer-Bus zum Einsatz kommen. Allerdings sind auch weitere Möglichkeiten zur Steuerung des gesamten Busses denkbar. Eine Steuerlogik könnte beispielsweise anstelle die Sende-/Empfangsschaltungen 2 zu kontrollieren Einfluß auf die Bus-Knoten 1 nehmen und dort die Freischaltung der verschiedenen UND Stufen regeln. Diese Steuerung kann dann zentral angeordnet oder aber auch lokal verteilt sein. Denkbar wäre auch die Steuerlogik so zu gestalten, das die Signale nur in bestimmte Richtungen und Bereiche des Busses weitergeleitet werden.

Bei Verwendung einer solchen Steuerlogik kommt es in der Regel niemals vor, daß zwei Sende-/Empfangsschaltungen 2 gleichzeitig ein Signal auf den Bus senden. Sollte dies dennoch einmal der Fall sein, kann dies für die Dauer der Gleichzeitigkeit zu einem verfälschten Ergebnis führen. Sendet beispielsweise mindestens eine der Sende-/Empfangsschaltungen 2 eine 1, empfangen alle Busteilnehmer auf ihren Datenleitungen ebenfalls diese 1, unabhängig von den Datensignalen der anderen ebenfalls sendenden Sende-/Empfangsschaltungen 2. Im Gegensatz zu einem Tristate-Bus führt dies nun aber zu keinem Kurzschluß.

Allerdings können beim gleichzeitigen Senden zweier Sende-/Empfangsschaltungen 2 Rückkopplungsschleifen entstehen, wodurch ein Datensignal fortlaufend zwischen zwei benachbarten Bus-Knoten 1 ausgetauscht wird. In diesem Fall würde eine einmal gesendete 1 auf den Datenleitungen des Busses erhalten bleiben, auch wenn mittlerweile schon wieder alle Sende-/Empfangsschaltungen 2 eine 0 senden. Dieser Zustand würde dann so lange anhalten, bis nicht mehr als eine Sende-/Empfangsschaltung 2 allein ein Steuersignal abgibt. Rückkopplungsschleifen dieser Art werden in den relevanten Betriebszuständen, wenn also jeweils nur eine Sende-/Empfangsschaltungen 2 sendet, niemals aktiv. Ihr theoretisches Auftreten ruft aber Schwierigkeiten beim Testen neu entworfener Strukturen mittels CAD-Werkzeugen hervor.

Mit der in Fig. 5 dargestellten Weiterbildung eines Bus-Knotens kann das Auftreten solcher Rückkopplungsschleifen vermieden werden. Diese Weiterbildung zeichnet sich dadurch aus, daß anstelle des zentralen UND/ODER Gatters 20 in Fig. 1 nun vier UND/ODER Gatter 201 bis 204 verwendet werden, die jeweils einer der vier Datensignal-Ausgangsleitungen D1o bis D4o vorgeschaltet sind. Die Anzahl der UND Stufen in diesen UND/ODER Gattern 201 bis 204 ist nun allerdings um eins niedriger als die Anzahl der Nachbarelemente, wobei die Eingangssignale der UND Stufen eines bestimmten UND/ODER Gatters, dessen Ausgang mit einer zu einem der Nachbarelemente führenden Datensignal-Ausgangsleitung verbunden ist, nur von den übrigen Nachbarelementen stammen und nicht von diesem selber. Im konkret dargestellten Beispiel gemäß Fig. 5 bedeutet dies, daß das zur Datensignal-Ausgangsleitung D1o gehörige UND/ODER Gatter 201 nur mit den Datensignal-Eingangsleitungen der Nachbarelemente zwei, drei und vier verbunden ist.

Dies hat zur Folge, daß nicht nur wie bei der Schaltung in Fig. 1 ein Zurücklaufen des Steuersignals zum sendenden Nachbarelement vermieden wird, sondern auch ein Zurücklaufen des Datensignals. Selbst wenn nun also zwei Sende-/Empfangsschaltung 2 gleichzeitig Steuersignale abgeben würden, würde sich ein Datensignal nur einmal in eine Richtung fortpflanzen und nicht mehr zwischen zwei Bus-Knoten 1 zirkulieren. Für den normalen Betriebsfall, daß jeweils nur eine der Sende-/Empfangsschaltungen 2 aktiv ist, sind beide angegebenen Schaltungen allerdings gleichwertig.

Bestehen die Datensignal-Leitungen aus mehreren parallel verlaufenden Leitungen, ist es möglich, das Bussystem so zu modifizieren, daß für die Sende-/Empfangsschaltungen 2 erkennbar ist, welcher Busteilnehmer gerade sendet. Dies kann beispielsweise dadurch erfolgen, daß einigen Datensignal-Leitungen Prioritäten zugeordnet werden, wobei die Sende-/Empfangsschaltungen 2 beim Senden jeweils auf der Leitung ihrer Priorität zusätzlich eine 1 senden. Für die empfangenden Sende-/Empfangsschaltungen 2 ist dann erkennbar, woher das entsprechende Signal stammt womit sie daraus eine Prioritätsentscheidung ableiten können.

Weiterhin kann berücksichtigt werden, daß bei einer Busleitung aus mehreren parallel verlaufenden Leitungen einige Busteilnehmer nicht alle dieser Leitungen beanspruchen. Werden beispielsweise die ersten acht Leitungen nur zur Übergabe von Speicheradressen verwendet, werden auf diesen von einigen Busteilnehmern entsprechend ihrer Funktion niemals Datensignale gesendet oder empfangen werden. Auf der anderen Seite kann es vorkommen, daß einige der Busteilnehmer grundsätzlich nur senden oder nur empfangen. In diesen Fällen ist es ausreichend, wenn Signale von den Bus-Knoten nur aus bestimmten Richtungen empfangen bzw. in bestimmte Richtungen weitergeleitet werden. Um dem Rechnung zu tragen, kann die Struktur der Bus-Knoten angepaßt werden. Beispielsweise können die entsprechenden überflüssigen UND Stufen der UND/ODER Gatter oder bei den Bus-Knoten gemäß Fig. 5 ganze UND/ODER Gatter weggelassen werden.

Abschließend ist anzumerken, daß die erfindungsgemäße Wirkung der einzelnen Bus-Knoten auch durch andere logische Schaltungen - beispielsweise NAND-NAND Strukturen - realisiert werden kann anstatt durch die dargestellten UND/ODER Gatter 20 bzw. 201 bis 204. Denkbar wäre beispielsweise auch, das gesamte Bussystem in negativer Logik aufzubauen und dann den UND/ODER Gattern entsprechende ODER/UND Gatter bzw. NOR-NOR Strukturen zu verwenden.

## Patentansprüche

1. Busschaltung aus Multiplexern zur Verbindung von Sende-/Empfangsschaltungen (2) mit Anschlußleitungen zum Abgeben und Empfangen eines Datensignals und eines ein Datensignal kennzeichnenden Steuersignals,
**dadurch gekennzeichnet,**
**daß** die Sende-/Empfangsschaltungen (2) über ihre Anschlußleitungen nur mit einem Bus-Knoten (1) verbunden sind, der wiederum selbst mit weiteren Sende-/Empfangsschaltungen (2) oder weiteren Bus-Knoten (1) verbunden ist, wobei jeder der Bus-Knoten (1) Folgendes aufweist:
a) Datensignal-Eingangsleitungen (D1i - D4i) und dazugehörige Steuersignal-Eingangsleitungen (C1i - C4i) zum Empfangen von Datensignalen bzw. ein Datensignal kennzeichnenden Steuersignalen von den angeschlossenen Sende-/Empfangsschaltungen (2) oder Bus-Knoten (1),
b) Datensignal-Ausgangsleitungen (D1o - D4o) und dazugehörige Steuersignal-Ausgangsleitungen (C1i - C4i) zum Senden von Datensignalen bzw. ein Datensignal kennzeichnenden Steuersignalen an die angeschlossenen Sende-/Empfangsschaltungen (2) oder Bus-Knoten (1),
c) eine erste Schaltung zum Weiterleiten eines empfangenen Datensignals an angeschlossene Sende-/Empfangsschaltungen (2) oder Bus-Knoten (1), falls gleichzeitig mit dem Datensignal auf der dazugehörigen Steuersignal-Eingangsleitung (C1i - C4i) ein Steuersignal empfangen wird und
d) eine zweite Schaltung zum Weiterleiten eines empfangenen Steuersignals an alle angeschlossenen Sende-/Empfangsschaltungen (2) oder Bus-Knoten (1) außer an diejenige Sende-/Empfangsschaltung (2) bzw. denjenigen Bus-Knoten (1), von dem das Steuersignal empfangen wird.

2. Busschaltung nach Anspruch 1,
**dadurch gekennzeichnet,**
**daß** die erste Schaltung so ausgebildet ist, daß ein Datensignal an alle angeschlossenen Sende-/Empfangsschaltungen (2) oder Bus-Knoten (1) weitergeleitet wird.

3. Busschaltung nach Anspruch 2,
**dadurch gekennzeichnet,**
**daß** die erste Schaltung von einem UND/ODER (20) Gatter gebildet ist, dessen Eingänge mit den Datensignal-Eingangsleitungen (D1i - D4i) und den Steuersignal-Eingangsleitungen (C1i - C4i) und dessen Ausgang mit allen Datensignal-Ausgangsitungen (D1o - D4o) verbunden sind.

4. Busschaltung nach Anspruch 1,
**dadurch gekennzeichnet,**
**daß** die erste Schaltung so ausgebildet ist, daß ein Datensignal an alle angeschlossenen Sende-/Empfangsschaltungen (2) oder Bus-Knoten (1) weitergeleitet wird, außer an diejenige Sende-/Empfangsschaltung (2) bzw. denjenigen Bus-Knoten (1), von dem das Steuersignal empfangen wird.

5. Busschaltung nach Anspruch 4,
**dadurch gekennzeichnet,**
**daß** die erste Schaltung von UND/ODER Gattern (201 - 204) gebildet ist, deren Ausgänge jeweils mit einer - zu einer bestimmten Sende-/Empfangsschaltung (2) oder Bus-Knoten (1) führenden - Datensignal-Ausgangsleitung (D1o - D4o) verbunden ist und deren Eingänge nur mit den von den anderen Sende-/Empfangsschaltung (2) oder Bus-Knoten (1) stammenden Datensignal-Eingangsleitungen (D1i - D4i) und Steuersignal-Eingangsleitungen (C1i - C4i) verbunden sind.

6. Busschaltung nach einem der vorherigen Ansprüche,
**dadurch gekennzeichnet,**
**daß** die zweite Schaltung durch mehrere ODER Gatter (31 - 34) gebildet ist.

7. Busschaltung nach einem der vorherigen Ansprüche,
**dadurch gekennzeichnet,**
**daß** eine Steuerlogik vorgesehen ist, durch die gewährleistet ist, daß zu einem bestimmten Zeitpunkt jeweils nur eine einzelne Sende-/Empfangsschaltung (2) Signale sendet.

8. Busschaltung nach einem der vorherigen Ansprüche,
**dadurch gekennzeichnet,**
**daß** eine Steuerlogik zur Regelung der Weiterleitung von Datensignalen in den Bus-Knoten (1) vorgesehen ist.

9. Busschaltung nach einem der vorherigen Ansprüche,
**dadurch gekennzeichnet,**
**daß** die Anzahl der angeschlossenen Sende-/Empfangsschaltungen (2) oder Bus-Knoten (1) für jeden Bus-Knoten (1) gleich ist.

10. Busschaltung nach einem der vorherigen Ansprüche,
**dadurch gekennzeichnet,**
**daß** die Bus-Knoten (1) sternförmig angeordnet sind.

11. Busschaltung nach einem der vorherigen Ansprüche,
**dadurch gekennzeichnet,**
**daß** in den Datensignal-Ausgangsleitungen (D1o - D4o) Buffer vorgesehen sind.

12. Busschaltung nach einem der vorherigen Ansprüche,
**dadurch gekennzeichnet,**
**daß** beim Senden von Datensignalen ein die sendende Sende-/Empfangsschaltung (2) kennzeichnendes Merkmal vorgesehen ist.

## Claims

1. Bus circuit of multiplexers for connecting transceiver circuits (2) with connecting lines for outputting and receiving a data signal and a control signal characterizing a data signal, **characterized in that** the transceiver circuits (2) are only connected via their connecting lines to a bus node (1) which, in turn, is itself connected to other transceiver circuits (2) or other bus nodes (1), each of the bus nodes (1) exhibiting the following:
a) data signal input lines (D1i - D4i) and associated control signal input lines (C1i - C4i) for receiving data signals or, respectively, control signals characterizing a data signal from the connected transceiver circuits (2) or bus nodes (1),
b) data signal output lines (D1o - D4o) and associated control signal output lines (C1o - C4o) for transmitting data signals or control signals characterizing a data signal to the connected transceiver circuits (2) or bus nodes (1),
c) a first circuit for forwarding a received data signal to connected transceiver circuits (2) or bus nodes (1) if a control signal is received on the associated control signal input line (C1i - C4i) at the same time as the data signal and
d) a second circuit for forwarding a received control signal to all connected transceiver circuits (2) or bus nodes (1) except to the transceiver circuit (2) or the bus node (1) from which the control signal is received.

2. Bus circuit according to Claim 1, **characterized in that** the first circuit is designed in such a manner that a data signal is forwarded to all connected transceiver circuits (2) or bus nodes (1).

3. Bus circuit according to Claim 2, **characterized in that** the first circuit is formed by an AND/OR gate (20), the inputs of which are connected to the data signal input lines (D1i - D4i) and the control signal input lines (C1i - C4i) and the output of which is connected to all data signal output lines (D1o - D4o).

4. Bus circuit according to Claim 1, **characterized in that** the first circuit is designed in such a manner that a data signal is forwarded to all connected transceiver circuits (2) or bus nodes (1) except to the transceiver circuit (2) or the bus node (1) from which the control signal is received.

5. Bus circuit according to Claim 4, **characterized in that** the first circuit is formed by AND/OR gates (201 - 204), the outputs of which are in each case connected to a data signal output line (D1o - D4o) leading to a particular transceiver circuit (2) or bus node (1) and the inputs of which are only connected to the data signal input lines (D1i - D4i) and control signal input lines (C1i - C4i) originating from the other transceiver circuit (2) or bus node (1).

6. Bus circuit according to one of the preceding claims, **characterized in that** the second circuit is formed by a number of OR gates (31 - 34).

7. Bus circuit according to one of the preceding claims, **characterized in that** a control logic is provided which ensures that in each case only a single transceiver circuit (2) is sending signals at a particular time.

8. Bus circuit according to one of the preceding claims, **characterized in that** a control logic is provided for controlling the forwarding of data signals into the bus node (1).

9. Bus circuit according to one of the preceding claims, **characterized in that** the number of connected transceiver circuits (2) or bus nodes (1) is identical for each bus node (1).

10. Bus circuit according to one of the preceding claims, **characterized in that** the bus nodes (1) are arranged in the form of a star.

11. Bus circuit according to one of the preceding claims, **characterized in that** buffers are provided in the data signal output lines (D1o - D4o).

12. Bus circuit according to one of the preceding claims, **characterized in that** a feature characterizing the transmitting transceiver circuit (2) is provided in the transmission of data signals.

## Revendications

1. Circuit bus constitué de multiplexeurs pour relier des circuits émetteurs-récepteurs (2) à des lignes de connexion pour la délivrance et la réception d'un signal de données et d'un signal de commande caractérisant le signal de données,
**caractérisé en ce que** les circuits émetteurs-récepteurs (2) sont reliés par l'intermédiaire de leurs lignes de connexion à un seul noeud de bus (1) qui est lui-même relié à d'autres circuits émetteurs-récepteurs (2) ou à d'autres noeuds de bus (1), chacun des noeuds de bus (1) possédant :
a) des lignes (D1i - D4i) d'entrée de signal de données et des lignes (C1i - C4i) associées d'entrée de signal de commande pour recevoir respectivement des signaux de données et des signaux de commande caractérisant un signal de données en provenance des circuits émetteurs-récepteurs (2) ou des noeuds de bus (1) connectés,
b) des lignes (D1o - D4o) de sortie de signal de données et des lignes (C1o - C4o) associées de sortie de signal de commande pour envoyer respectivement des signaux de données et des signaux de commande caractérisant un signal de données aux circuits émetteurs-récepteurs (2) ou aux noeuds de bus (1) connectés,
c) un premier circuit pour réacheminer un signal de données reçu vers des circuits émetteurs-récepteurs (2) ou noeuds de bus (1) connectés, si un signal de commande est reçu en même temps que le signal de données sur la ligne (C1i - C4i) associée d'entrée de signal de commande, et
d) un deuxième circuit pour réacheminer un signal de données reçu vers tous les circuits émetteurs-récepteurs (2) ou noeuds de bus (1) connectés, sauf vers le circuit émetteur-récepteur (2) ou le noeud de bus (1) en provenance duquel est reçu le signal de commande.

2. Circuit bus selon la revendication 1, **caractérisé en ce que** le premier circuit est conçu de telle sorte qu'un signal de données est réacheminé vers tous les circuits émetteurs-récepteurs (2) ou noeuds de bus (1) connectés.

3. Circuit bus selon la revendication 2, **caractérisé en ce que** le premier circuit est formé par une porte ET/OU (20) dont les entrées sont reliées aux lignes (D1i - D4i) d'entrée de signal de données et aux lignes (C1i - C4i) d'entrée de signal de commande, et dont la sortie est reliée à toutes les lignes (D1o - D4o) de sortie de signal de données.

4. Circuit bus selon la revendication 1, **caractérisé en ce que** le premier circuit est conçu de telle sorte qu'un signal de données est réacheminé vers tous les circuits émetteurs-récepteurs (2) ou noeuds de bus (1) connectés, sauf vers le circuit émetteur-récepteur (2) ou le noeud de bus (1) en provenance duquel est reçu le signal de commande.

5. Circuit bus selon la revendication 4, **caractérisé en ce que** le premier circuit est formé par des portes ET/OU (201 - 204)dont les sorties sont respectivement reliées à une ligne (D1o - D4o) de sortie de signal de données menant à un circuit émetteur-récepteur (2) ou noeud de bus (1) donné, et dont les entrées ne sont reliées qu'aux lignes (D1i - D4i) d'entrée de signal de données et lignes (C1i - C4i) d'entrée de signal de commande provenant des autres circuits émetteurs-récepteurs (2) ou noeuds de bus (1).

6. Circuit bus selon l'une quelconque des revendications précédentes, **caractérisé en ce que** le deuxième circuit est formé par plusieurs portes OU (31 - 34).

7. Circuit bus selon l'une quelconque des revendications précédentes, **caractérisé en ce qu'**il est prévu une logique de commande qui garantit qu'à un instant donné, un seul circuit émetteur-récepteur (2) émet chaque fois des signaux.

8. Circuit bus selon l'une quelconque des revendications précédentes, **caractérisé en ce qu'**il est prévu une logique de commande pour réguler le réacheminement de signaux de données vers les noeuds de bus (1).

9. Circuit bus selon l'une quelconque des revendications précédentes, **caractérisé en ce que** le nombre de circuits émetteurs-récepteurs (2) ou noeuds de bus (1) connectés est le même pour chaque noeud de bus (1).

10. Circuit bus selon l'une quelconque des revendications précédentes, **caractérisé en ce que** les noeuds de bus (1) sont disposés en étoile.

11. Circuit bus selon l'une quelconque des revendications précédentes, **caractérisé en ce que** des mémoires tampons sont prévues dans les lignes (D1o - D4o) de sortie de signal de données.

12. Circuit bus selon l'une quelconque des revendications précédentes, **caractérisé en ce que**, dans l'émission de signaux de données, il est prévu un attribut caractérisant le circuit émetteur-récepteur (2) qui émet les signaux.
